Europäisches Patentamt

European Patent Office

Office européen des brevets

(19)

(11) **EP 0 581 808 B1**

(12) **EUROPÄISCHE PATENTSCHRIFT**

(45) Veröffentlichungstag und Bekanntmachung des Hinweises auf die Patenterteilung:
**10.12.1997 Patentblatt 1997/50**

(21) Anmeldenummer: **92908844.1**

(22) Anmeldetag: **16.04.1992**

(51) Int Cl.⁶: **H04N 7/00**, H04N 7/24, H04N 11/00

(86) Internationale Anmeldenummer:
**PCT/EP92/00852**

(87) Internationale Veröffentlichungsnummer:
**WO 92/20189 (12.11.1992 Gazette 1992/28)**

(54) **VERFAHREN ZUR KOMPATIBLEN ÜBERTRAGUNG, DECODIERUNG ODER AUFZEICHNUNG VON PROGRESSIV ABGETASTETEN BILDSIGNALEN IM ZWISCHENZEILENFORMAT**

PROCESS FOR COMPATIBLE TRANSMISSION, DECODING OR RECORDING OF PROGRESSIVELY SCANNED PICTURE SIGNALS IN INTERLACE FORMAT

PROCEDE DE TRANSMISSION, DE DECODAGE OU D'ENREGISTREMENT COMPATIBLES DE SIGNAUX VIDEO BALAYES PROGESSIVEMENT A FORMAT ENTRELACE

(84) Benannte Vertragsstaaten:
**DE ES FR GB IT**

(30) Priorität: **25.04.1991 DE 4113506**
**14.06.1991 DE 4119676**

(43) Veröffentlichungstag der Anmeldung:
**09.02.1994 Patentblatt 1994/06**

(73) Patentinhaber: **DEUTSCHE THOMSON-BRANDT GMBH**
**78048 Villingen-Schwenningen (DE)**

(72) Erfinder: **HÜTTER, Ingo**
**D-29223 Celle (DE)**

(74) Vertreter: **Hartnack, Wolfgang, Dipl.-Ing.**
**Deutsche Thomson-Brandt GmbH**
**Patentabteilung**
**Göttinger Chaussee 76**
**30453 Hannover (DE)**

(56) Entgegenhaltungen:
**EP-A- 0 432 529          WO-A-90/06655**
**WO-A-91/03906          WO-A-91/04637**

**Beschreibung**

Die Erfindung betrifft ein Verfahren zur kompatiblen Übertragung und/oder Aufzeichnung von progressiv abgetasteten Bildsignalen im Zwischenzeilen-Format.

Stand der Technik

In WO-A-9104637 ist ein Letterbox-Fernsehsystem beschrieben, bei dem 432 aktive und progressiv abgetastete Zeilen mit Hilfe eines Helpersignals kompatibel zum Interlace-Format (Zwischenzeilen-Format) übertragen werden. Dabei werden Bildpunktwerte für zu übertragende Zeilen der Interlace-Bildsignale unter Verwendung eines vertikalen Filters vertikal vorgefiltert und Helpersignale unter Verwendung dieses Filters gewonnen. Mit Hilfe dieser Helpersignale können bei einer Decodierung wieder progressive Bildsignale rekonstruiert werden. Diese Rekonstruktion ist jedoch nicht verlustfrei.

Erfindung

Der Erfindung liegt die Aufgabe zugrunde, ein Verfahren zur kompatiblen Übertragung von progressiv abgetasteten Bildsignalen im Interlace-Format anzugeben, bei dem, abgesehen von den Auflösungsverlusten durch die horizontale Kompression, eine fehlerfreie Rekonstruktion der Bildsignale ermöglicht wird.

Diese Aufgabe wird durch das in Anspruch 1 angegebene Verfahren gelöst.

Vorteilhafte Weiterbildungen des erfindungsgemäßen Verfahrens ergeben sich aus den abhängigen Ansprüchen.

In einem zukünftigen 16:9-Letterbox-Empfänger stehen nur die Zeilen des kompatiblen Interlace-Bildes direkt zur Verfügung. Die übrigen Zeilen für die progressive Wiedergabe müssen redundanz- und irrelevanzreduziert zusätzlich übertragen werden. Dazu wird beispielsweise ein 625L/16:9-Quellsignal mit progressiver Abtastung und 576 aktiven Zeilen vertikal um den Faktor 3/4 transcodiert. Aus den so entstandenen 432 aktiven Zeilen wird durch synthetisches Interlace ein kompatibles Letterbox-Bildsignal mit 432 aktiven Zeilen gewonnen, wobei ein Helper-Signal generiert wird, mit dem in einem 16:9-Empfänger zusammen mit den kompatibel übertragenen Interlace-Zeilen wieder 432 progressive Zeilen gewonnen werden können. Durch eine weitere vertikale Transcodierung um den Faktor 4/3 können aus diesen 432 aktiven Zeilen wieder 576 aktive progressive Zeilen gebildet werden.

Für die Generierung des Helpersignals wird jeweils aus benachbarten Interlace-Zeilen die zwischen diesen Zeilen liegende 'progressive' Zeile prädiziert und die Differenz zwischen dieser vorhergesagten Zeile und der tatsächlichen 'progressiven' Zeile codiert innerhalb der Letterbox-Streifen mitübertragen. Weil für diese Übertragung nur 576-432 = 144 Zeilen zur Verfügung stehen, aber 432 solcher Helpersi-gnal-Zeilen darin unterzubringen sind, wird im Coder eine zeitliche Kompression um den Faktor 3 und im Decoder eine entsprechende zeitliche Expansion durchgeführt.

Bei einem derartigen Verfahren können an folgenden Stellen Bildqualitäts-Verluste auftreten:

1) Durch die Transcodierung im Coder um 3/4 und im Decoder um 4/3 geht vertikale Auflösung verloren. Aufgrund des Kell-Effekts sind diese Fehler aber kaum sichtbar.

2) Da für die Übertragung des Helpersignals nur eine begrenzte Kanalkapazität zur Verfügung steht und das Helpersignal darum vor der Übertragung zeitlich komprimiert wird, ist eine einwandfreie Wiedergewinnung dieses Helpersignals im 16:9-Empfänger nicht möglich. Entsprechende Fehler treten dann auch im rekonstruierten Bild auf.

3) Auch wenn das Helpersignal verlustfrei übertragen würde, wäre mit bisher vorgeschlagenen Verfahren und Standardfiltern eine fehlerfreie Rekonstruktion des progressiven Eingangsbildes im Empfänger nur dann möglich, wenn ideale Filter verwendet werden. Mit üblichen Filtern können zwar die durch die vertikale Unterabtastung nicht übertragenen Zeilen einwandfrei rekonstruiert werden, doch ist dies bei den kompatibel übertragenen Zeilen nicht möglich.

Durch speziell angeordnete Halfband-Filter im Coder und eine inverse Filterung im Decoder ist es jedoch erfindungsgemäß möglich, die Fehler nach 3) zu vermeiden.

Damit können unter Verwendung der genannten Filter durch eine zusätzliche Nachbildung der coderseitigen Bildsignalverarbeitung im Decoder Codierfehler abgeschätzt und korrigiert werden und dadurch die Fehler nach 3) vermieden werden.

Diese Abschätzung und Korrektur kann auch iterativ erfolgen. Dadurch können die decoderseitigen Rekonstruktionsfehler noch weiter minimiert werden.

Im Prinzip besteht das erfindungsgemäße Verfahren darin, daß zur kompatiblen Übertragung und/oder Aufzeichnung von progressiven Bildsignalen im Letterbox-Format senderseitig Helpersignale unter Verwendung eines vertikalen Filters gewonnen und mitübertragen und/oder aufgezeichnet werden und mit Hilfe dieser Helpersignale bei einer Wiedergabe progressive Bildsignale rekonstruiert werden können, wobei bei der senderseitigen Codierung Bildpunkt-Werte für zu übertragende und/oder aufzuzeichnende Zeilen vertikal mit einem Halfband-Filter vorgefiltert werden und dabei jeweils nur der Bildpunkt-Wert aus der jeweiligen Zeile und vertikal darüber und darunter liegende Bildpunkt-Werte aus nicht übertragenen und/oder aufzeichnenden Zeilen ($P2_i$, $P4_i$, ...) verwendet werden,

und bei der empfängerseitigen Decodierung Bildpunkt-Werte von übertragenen und/oder aufgezeichneten Zeilen vertikal mit einem zum senderseitigen Halfband-Filter inversen Filter gefiltert werden, wobei dieses inverse Filter die Tiefpaß-Wirkung des Halfband-Filters aufhebt.

Zeichnungen

Anhand der Zeichnungen werden Ausführungsbeispiele der Erfindung beschrieben. Die Zeichnungen zeigen in:

Fig. 1  ein Schema zur Bildung progressiver Wiedergabe-Signale aus kompatibel übertragenen Interlace-Signalen, von dem die Erfindung ausgeht;

Fig. 2  ein verbessertes Schema gemäß der Erfindung zur Bildung progressiver Wiedergabe-Signale aus kompatibel übertragenen Interlace-Signalen;

Fig. 3  ein dreidimensionales Schema zur Bildung progressiver Wiedergabe-Signale aus kompatibel übertragenen Interlace-Signalen;

Fig. 4  einen erfindungsgemäßen Coder und Decoder;

Fig. 5  Abtastraster und Spektralbereich in der $f_y$-$f_t$-Ebene für eine progressive Quelle;

Fig. 6  Abtastraster und Spektralbereich in der $f_y$-$f_t$-Ebene für ein Schema nach Fig. 3;

Fig. 7  Abtastraster und Spektralbereich in der $f_y$-$f_t$-Ebene für ein Schema nach Fig. 2;

Fig. 8  ein Blockschaltbild eines alternativen Decoders; und

Fig. 9  einen Tiefpaßfilter-Frequenzgang.

Ausführungsbeispiele

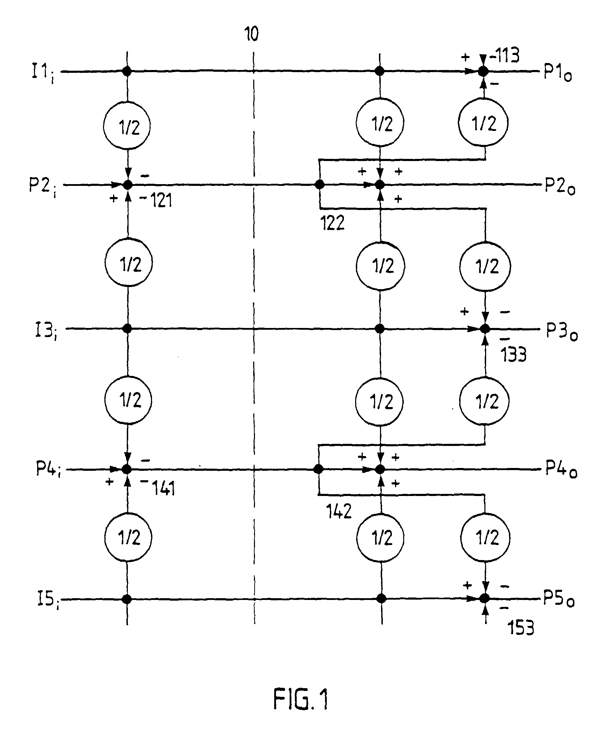

In Fig. 1 ist ein Ausschnitt von im Empfänger zu bildenden Progressiv-Zeilen eines Bildsignals dargestellt, wobei jede zweite Zeile durch eine (nicht dargestellte) Vorfilterung gleichzeitig eine kompatibel übertragene Zeile im Interlace-Format darstellt. Links vom Übertragungskanal 10 ist eine coderseitige Verarbeitung und rechts vom Übertragungskanal eine decoderseitige Verarbeitung dargestellt.

Die Zeilen mit den bereits mit üblichen Tiefpaßfiltern vertikal vorgefilterten Eingangssignalen $I1_i$, $I3_i$, $I5_i$, ... werden unverändert innerhalb eines Halbbilds übertragen und sind damit kompatibel. Von dem Wert der Bildpunkte der Zeilen mit den Eingangssignalen $P2_i$, $P4_i$, ... wird in entsprechend angeordneten Subtrahierern 121, 141, ... jeweils der halbe Wert von den zwei darüber- und darunterliegenden Bildpunkten aus den benachbarten Zeilen $I1_i$, $I3_i$, $I5_i$, ... abgezogen. Die Ausgangssignale dieser Subtrahierer werden horizontal um den Faktor drei komprimiert (nicht dargestellt) und in den Zeilen der Letterbox-Streifen als vertikales Helpersignal übertragen.

Die Kreise in den Figuren 1, 2 und 3 stellen jeweils eine Multiplikation mit dem innerhalb des Kreises angegebenen Faktor dar.

Im Decoder wird das Helpersignal zunächst um den Faktor drei expandiert (nicht dargestellt). Zu den den Eingangssignalen $P2_i$, $P4_i$, ... entsprechenden Werten in den Helpersignal-Zeilen wird in entsprechend angeordneten Addierern 122, 142, ... jeweils wieder der halbe Wert von den zwei darüber- und darunterliegenden Bildpunkten aus den benachbarten Zeilen $I1_i$, $I3_i$, $I5_i$ ... addiert, wobei sich die entsprechenden Ausgangssignale $P2_o$, $P4_o$, ... ergeben:

$$P2_o = P2_i - I1_i/2 - I3_i/2 + I1_i/2 + I3_i/2 = P2_i \, .$$

Von den den Eingangssignalen $I1_i$, $I3_i$, $I5_i$, ... entsprechenden Werten in den Interlace-Zeilen kann in entsprechend angeordneten Subtrahierern 113, 133, 153, ... jeweils der halbe Wert von den zwei darüber- und darunterliegenden Bildpunkten aus den benachbarten Zeilen $P2_i$, $P4_i$, ... subtrahiert werden, um einen durch die Vorfilterung entstandenen Höhenverlust annähernd auszugleichen, wobei sich die entsprechenden Ausgangssignale $P1_o$, $P3_o$, $P5_o$, ... ergeben:

$$P3_o = I3_i - 0.5 * (P2_i - I1_i/2 - I3_i/2 + P4_i - I5_i/2 - I3_i/2)$$

$$= I1_i/4 - P2_i/2 + 3 * I3_i/2 - P4_i/2 + I5_i/4 \, .$$

Der daraus resultierende Frequenzgang ist aber ohne besondere Maßnahmen nicht linear und verursacht die obengenannte Bildqualitäts-Minderung beim progressiven Empfang.

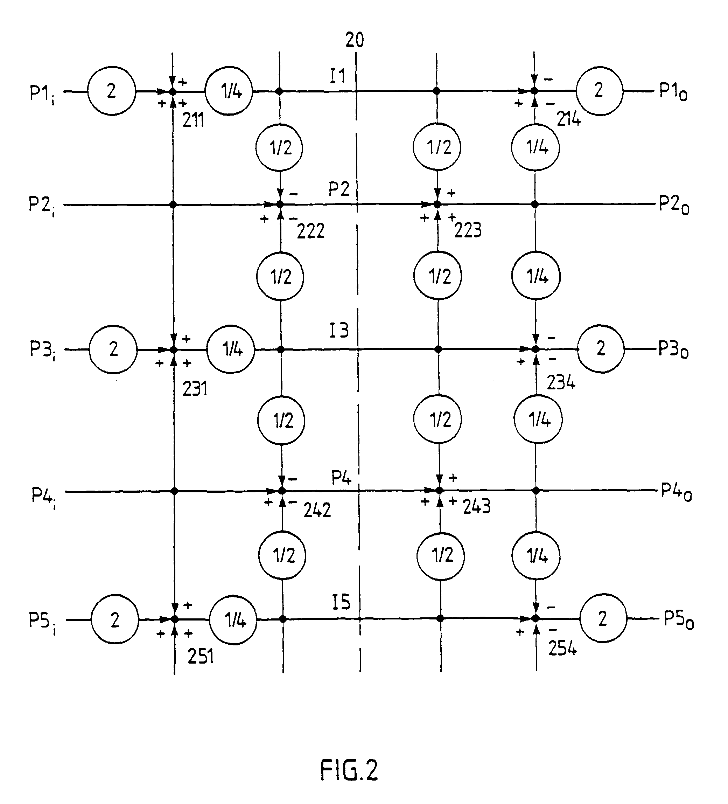

In Fig. 2 ist ein Ausschnitt von Progressiv-Zeilen eines Bildsignals dargestellt. Links vom Übertragungskanal 20 befindet sich die coderseitige und rechts vom Übertragungskanal die decoderseitige Verarbeitung.

Die Zeilen mit den Eingangssignalen $P1_i$, $P3_i$, $P5_i$, ... werden durch ein 1-2-1-Filter vorgefiltert und bilden die kompatibel übertragenen Interlace-Zeilen I1, I3, I5, ... . Dazu wird jeweils in einem Addierer 211, 231, 251, ... zu dem erdoppelten Wert eines Bildpunkts dieser Zeilen der Wert von den zwei darüber- und darunterliegenden Bildpunkten aus den benachbarten Zeilen $P2_i$, $P4_i$, ... addiert und das Ausgangssignal des jeweiligen Addierers mit dem Faktor 1/4 multipliziert. Von dem Wert der Bildpunkte der Zeilen mit den Eingangssignalen $P2_i$, $P4_i$, ... wird in entsprechend angeordneten Subtrahierern 222, 242, ... jeweils der halbe Wert von den zwei darüber- und darunterliegenden Bildpunkten aus den benachbarten Interlace-Zeilen I1, I3, I5, ... abgezogen. Die Ausgangssignale P2, P4, ... dieser Subtrahierer werden horizontal um den Faktor drei komprimiert (nicht dargestellt) und in den Zeilen der Letterbox-Streifen als vertikales Helpersignal übertragen.

Im Decoder wird das Helpersignal zunächst um den Faktor drei expandiert (nicht dargestellt). Zu den den wiedergebildeten Ausgangssignalen P2, P4, ... entsprechenden Werten in den Helpersignal-Zeilen wird in entsprechend angeordneten Addierern 223, 243, ... jeweils wieder der halbe Wert von den zwei darüber- und darunterliegenden Bildpunkten aus den benachbarten Interlace-Zeilen I1, I3, I5, ... addiert, wobei sich die entsprechenden Ausgangssignale $P2_o$, $P4_o$, ... ergeben:

$$P2_o = P2+I1/2+I3/2 = P2_i-I1/2-I3/2+I1/2+I3/2 = P2_i \ .$$

Von den den Interlace-Zeilen I1, I3, I5, ... entsprechenden Bildpunkt-Werten wird in entsprechend angeordneten Subtrahierern 214, 234, 254, ... jeweils ein Viertel des Wertes von den zwei darüber- und darunterliegenden Bildpunkten aus den benachbarten Ausgangssignalen P2, P4, ... subtrahiert. Die Ausgangssignale der Subtrahierer 214, 234, 254, ... werden jeweils mit dem Faktor zwei multipliziert, wobei sich die entsprechenden Ausgangssignale $P1_o$, $P3_o$, $P5_5$, ... ergeben:

$$P3_o = 2*(I3-P2_o/4-P4_o/4) =$$

$$2*((2*P3_i+P2_i+P4_i)/4-P2_i/4-P4_i/4) = 2*(P3_i/2) = P3_i \ .$$

Für das verbesserte Schema in Fig. 2 werden HaLfband-Filter verwendet. Ein Halfband-Filter mit den Koeffizienten A, B, C, D, E ... hat allgemein die folgende Form:

... E O D O C O B A B O C O D O E ...

In Fig. 2 wird zur Gewinnung der Interlace-Zeilen I1, I3, I5, ... die einfachste Form eines solchen Halfband-Filters verwendet, ein sogenanntes 1-2-1-Filter. Dieses Filter entspricht den Koeffizienten B A B. Durch die Verwendung eines Halfband-Filters bei dieser senderseitigen Tiefpaßfilterung werden die Werte in den Interlace-Zeilen I1, I3, I5, ... nur aus der aktuellen Zeile selbst und aus den später ausgetasteten Zeilen mit den Ausgangssignalen P2, P4, ... gewonnen.

Im folgenden soll eine Zeile n des progressiven Quell-Bildes betrachtet werden, die nach der senderseitigen Tiefpaßfilterung im kompatiblen Bild übertragen wird. Bei Verwendung eines Halfband-Filters mit den Koeffizienten A, B, C und D berechnet sich die Luminanz L(n) der gefilterten Zeile n zu:

$$L_f(n) = D*L(n-5) + C*L(n-3) + B*L(n-1) + A*L(n) + B*L(n+1) +C*L(n+3) + D*L(N+5)$$

Die Luminanz $L_r$ der Zeilen n-5, n-3, n-1, n+1, n+3 und n+5 kann im Empfänger mit Hilfe des Helper-Signals zurückgewonnen werden. Die Luminanz $L_r(n)$ der rekonstruierten Zeile n ergibt sich dann zu:

$$L_r(n) = (-D*L_r(n-5)-C*L_r(n-3)-B*L_r(n-1) +L_f(n)$$

$$-B*L_r(n+1)-C*L_r(n+3)-D*L_r(n+5))/A.$$

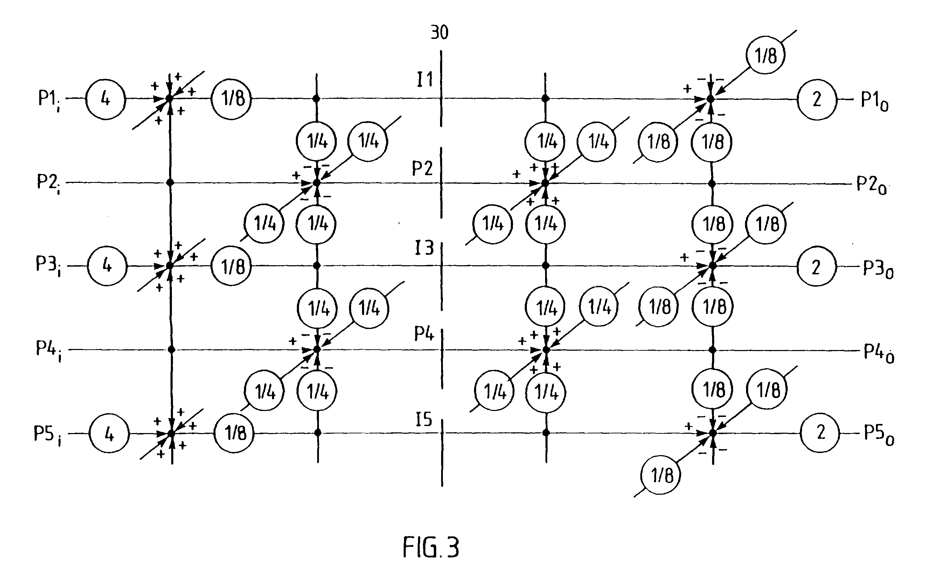

Fig. 3 gibt ein Schema auf der Grundlage des Schemas von Fig. 2 wieder. In den Addierern und Subtrahierern werden zusätzlich entsprechend multiplizierte Bildpunkt-Werte von zeitlich benachbarten Bildern hinzugefügt. Dadurch läßt sich bei statischem Bildinhalt im kompatiblen Bild eine dem progressiven Bild entsprechende Vertikal-Auflösung erreichen. Die Multiplikationsfaktoren werden entsprechend den Angaben in der Zeichnung angepaßt.

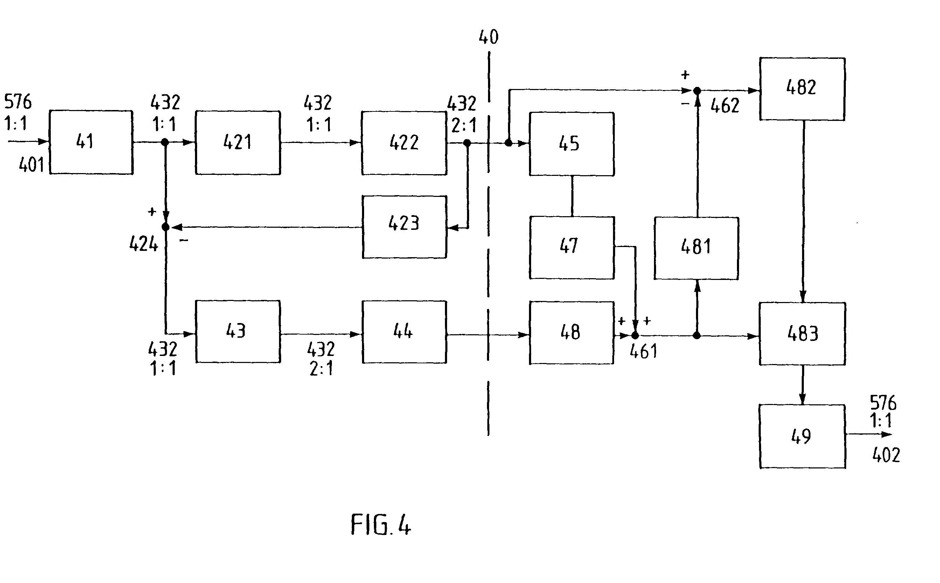

Fig. 4 gibt ein Blockschaltbild für einen erfindungsgemäßen Coder und Decoder wieder. Dem Eingang 401 wird von einer Bildquelle ein progressives 16:9-Bildsignal mit 576 aktiven Zeilen zugeführt. Die Bilder werden in einem ersten Transcoder 41 vertikal mit dem Faktor 3/4 zu jeweils 432 aktiven Zeilen transcodiert und in einem Halfband-Filter 421 vertikal für eine nachfolgende Progressiv-Interlace-Wandlung vorgefiltert. Diese Progressiv-Interlace-Wandlung erfolgt in einem ersten Interlace-Unterabtaster 422, in dem ein synthetisches Interlace erzeugt wird, wobei die Ausgangsbilder das Format 16:9/432L/2:1 (432 aktive Zeilen) haben. Anschließend werden die 16:9-Bilder entsprechend des Letterbox-Verfahrens innerhalb eines kompatiblen 4:3-Formats angeordnet (nicht dargestellt).

Das zugehörige Helpersignal (P2, P4 ...) zur Rekonstruktion der progressiven Bildsignale im 16:9-Empfänger wird folgendermaßen gewonnen: Die Ausgangssignale des ersten Interlace-Unterabtasters 422 werden in einem ersten Vertikal-Interpolator 423 wieder zu einem Format 16:9/432L/1:1 gewandelt und in einem Subtrahierer 424 (entspricht den Subtrahierern 222, 242, ... in Fig. 2) von den Ausgangssignalen des ersten Transcoders 41 subtrahiert. Dieses Differenzsignal wird in einem zweiten Interlace-Unterabtaster 43 zu einem Ausgangsformat von 16:9/432L/2:1 umgeformt und zwar so, daß diejenigen Helpersignal-Zeilen bereitgestellt werden, die nicht zu den kompatibel übertragenen Interlace-Zeilen I1, I3, I5, ... gehören. Um die Helpersignale kompatibel als Zusatzinformationen, z.B. in den Letterbox-Streifen, übertragen zu können, erfolgt in einem Helper-Coder 44 z.B. eine horizontale 3:1-Transcodierung, eine Verringerung der Amplitude und eine Ultraschwarz-Modulation, wobei die Zusatzinformationen in den Randstreifen des Letterbox-Formats angeordnet werden (nicht dargestellt).

Im Helper-Decoder 48 erfolgt eine entsprechend inverse Signalverarbeitung. Das Ausgangssignal im Format 432L/2:1 wird einem nachfolgenden Addierer 461 zugeführt, der den Addierern 223, 243, ... in Fig. 2 entspricht. Das 432L/2:1-Hauptsignal gelangt über einen zweiten Vertikal-Interpolator 45 und eine Zeilen-Austastschaltung 47 ebenfalls zum Addierer 461. Im zweiten Vertikal-Interpolator werden Mittelwerte von entsprechenden Bildpunkten aus jeweils benachbarten Interlace-Zeilen I1, I3, I5, ... gebildet und mit der Zeilen-Austastschaltung 47 die Interlace-Zeilen unterdrückt. Am Ausgang des Addierers stehen die rekonstruierten Zeilen $P2_o$, $P4_o$, ... zur Verfügung, die einem Zeilenverkämmer 483 und einem zum Halfband-Filter 421 inversen Filter 481 zugeführt werden. In einem Subtrahierer 462 werden die Ausgangssignale dieses inversen Filters vom 432L/2:1-Hauptsignal subtrahiert und gelangen anschließend zu einem Dividierer 482. Subtrahierer 462 entspricht den Subtrahierern 214, 234, 254, ... aus Fig. 2. Der Dividierer normiert das Ausgangssignal des Subtrahierers wieder und gibt sein Ausgangssignal im Format 432L/2:1 an den Zeilenverkämmer 483 weiter. In diesem Zeilenverkämmer werden die mit Hilfe der Helpersignale generierten, fehlenden Zeilen wieder den entsprechenden korrigierten Zeilen aus dem Hauptsignal hinzugefügt, wodurch ein Bildsignal im Format 432L/1:1 entsteht. Die Ausgangssignale des Zeilenverkämmers 483 können in einem nachfolgenden zweiten Transcodierer 49 um den Faktor 4/3 vertikal transcodiert werden, womit am Ausgang 402 wieder ein progressives Bildsignal mit 576 aktiven Zeilen zur Verfügung steht.

Für die Interpolation im ersten 423 und zweiten 45 Vertikal-Interpolator kann ein 1-1-Filter verwendet werden, d.h. es wird bei der Interpolation der Mittelwert aus den benachbarten Zeilen berechnet.

In entsprechender Weise kann der Coder und der Decoder angepaßt werden, wenn ein zweidimensionales vertikal-temporales-Filter nach Fig. 3 Verwendung finden soll.

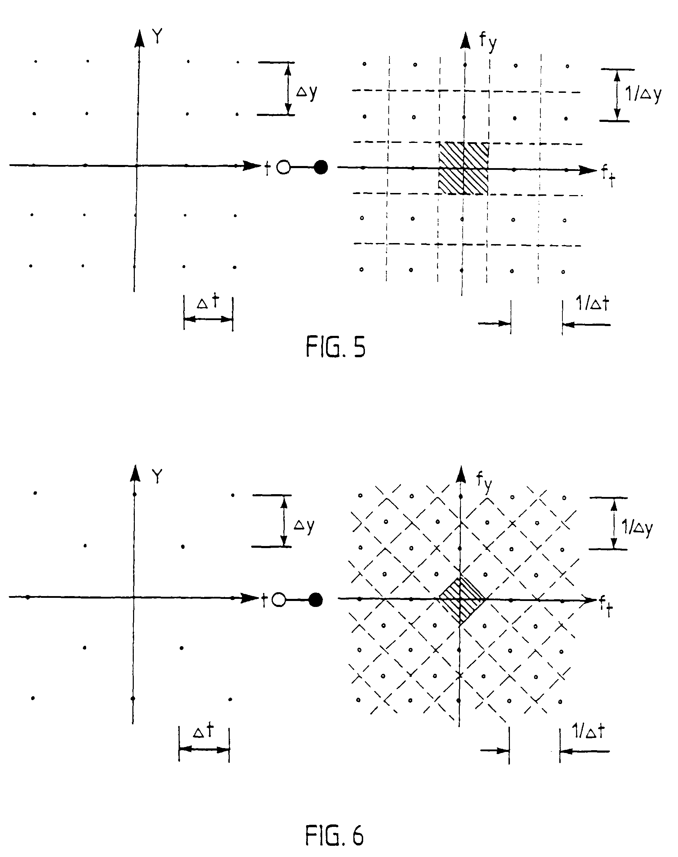

Fig. 5 zeigt links das Abtastraster für eine progressive Bildsignal-Quelle in der y-t-Ebene und rechts die zugehörige Darstellung im Frequenzbereich. Der Basisband-Bereich ist schraffiert.

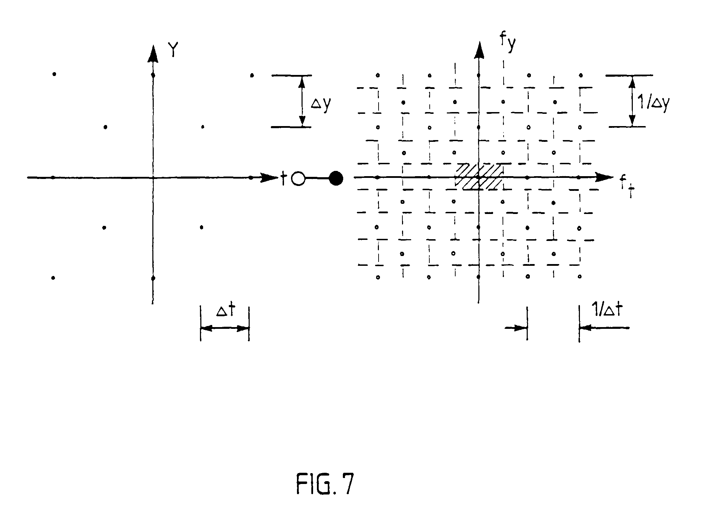

Soll aus einem progressiven Bildsignal ein Interlace-Signal gewonnen werden, muß das progressive Bild vertikaltemporal so gefiltert werden, daß kein Alias auftritt. Dies kann z.B. durch eine vertikal-temporale Filterung nach Fig. 6 oder durch eine vertikale Filterung nach Fig. 7 erfolgen. Links ist jeweils wieder das entsprechende Abtastraster und rechts der zugehörige Frequenzbereich dargestellt. Eine entsprechende Filterung wird im Tiefpaß 421 durchgeführt. Für das Schema nach Fig. 3 ist eine Bandbegrenzung nach Fig. 6 vorteilhaft und für das Schema nach Fig. 2 eine Bandbegrenzung nach Fig. 7.

Das Halfband-Filter kann die folgenden Koeffizienten verwenden:
A=256/512,       B=158/512,       C=-40/512,       D=13/512,       E=-3/512.

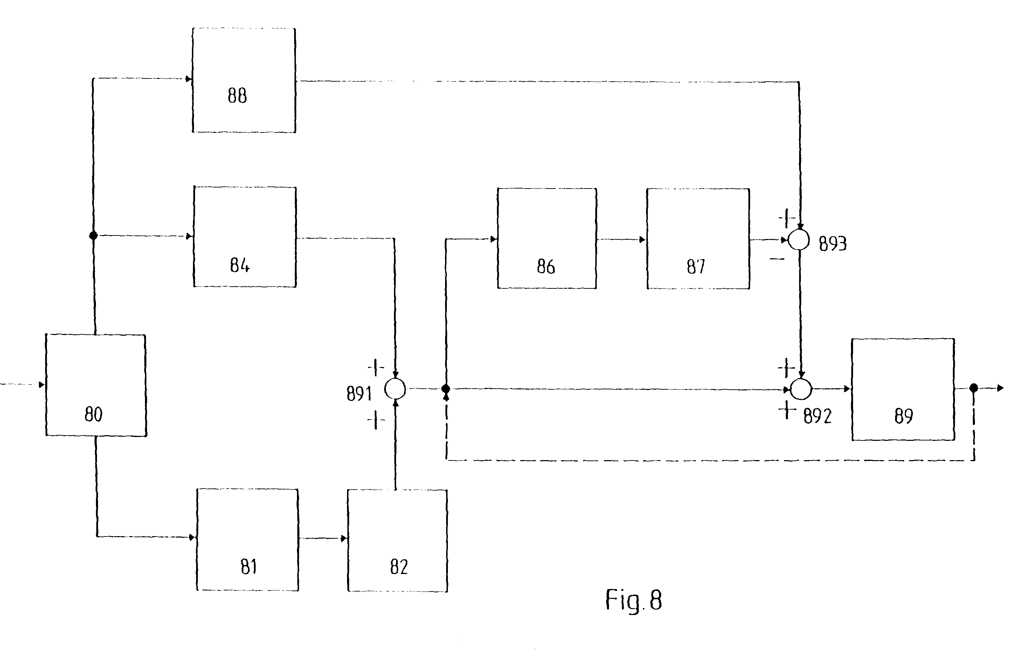

Ein Decoder nach Fig. 8 liefert ebenfalls eine verbesserte Bildqualität in einem 16:9-Empfänger, wenn senderseitig ein Coder entsprechend W091/04637 verwendet wurde. Das übertragene Letterbox-Signal wird in einer Auftrennschaltung 80 wieder in das Hauptsignal mit 432 aktiven Zeilen und in das Helpersignal mit 2*72 Zeilen aufgespalten. Im Helper-Decoder 81 wird das Helpersignal entsprechend der senderseitigen Codierung decodiert. Das somit wieder im Interlace-Raster mit 432 aktiven Zeilen vorliegende Differenzsignal wird in einem ersten Interpolator 82 in ein progressives Bildsignal gewandelt und in einem ersten Addierer 891 mit dem in einem zweiten Interpolator 84 ebenfalls wieder in ein progressives Bildsignal umgeformten Hauptsignal kombiniert. Am Ausgang dieses Addierers steht das rekonstruierte progressive Bildsignal mit 432 aktiven Zeilen wieder zur Verfügung. Es wird einem ersten Eingang eines zweiten Addierers 892 zugeführt und in einem Transcodierer 89 vertikal um 4/3 expandiert zu einem progressiven Bildsignal mit 576 aktiven Zeilen. Mit Hilfe der bisher aufgeführten Teile des Decoders können zwar die bei der senderseitigen Interlace-Unterabtastung abgetrennten Zeilen fehlerfrei rekonstruiert werden (abgesehen von Übertragungsfehlern), aber es ist nicht möglich, den Einfluß der senderseitigen Tiefpaßfilterung auf die übertragenen (kompatiblen) Zeilen vollständig rückgängig zu machen. Um diesen Fehler zu verringern, wird das am Ausgang des ersten Addierers 891 anliegende rekonstruierte Bild in einem Tiefpaß-Filter 86 vertikal entsprechend der zugehörigen senderseitigen Tiefpaß-Filterung gefiltert. Anschließend werden die Bildpunkt-Werte der nicht übertragenen Zeilen in einer Zeilen-Unterdrückungsschaltung 87 ausgeblendet bzw. auf 0 gesetzt. In einer Auffüllschaltung 88 wird das empfangene Interlace-Hauptbild in die Form eines progressives Bildes gewandelt, indem zwischen den übertragenen Zeilen Zeilen mit Bildpunkt-Werten von 0 eingesetzt werden. In einem Subtrahierer 893 wird die Differenz der beiden Ausgangssignale der Auffüllschaltung und der Zeilen-Unterdrückungsschaltung gebildet und dem zweiten Eingang des zweiten Addierers 892 zugeführt.

Das in diesem Subtrahierer gebildete Differenz-Bildsignal zwischen den senderseitig vertikal tiefpaßgefilterten kompatiblen Zeilen und den mit gleicher Filtercharakteristik tiefpaßgefilterten Zeilen des decoderseitig progressiv rekonstruierten Bildsignals entspricht nun ungefähr dem Differenz-Bildsignal zwischen dem decoderseitig progressiv rekonstruierten Bildsignal am Ausgang des ersten Addierers 891 und den senderseitig ungefilterten kompatiblen Zeilen. Obwohl in die vertikale Tiefpaßfilterung auch die Rekonstruktionsfehler der benachbarten Zeilen eingehen, ist das Differenz-Bildsignal am Ausgang des Subtrahierers 893 eine gute Approximation des tatsächlichen Fehlers. Somit werden die Rekonstruktionsfehler verringert, wenn das geschätzte Fehlersignal zum rekonstruierten Bildsignal im zweiten Addierer 892 hinzugefügt wird.

Vorteilhaft kann der noch verbleibende Restfehler durch iterative Anwendung der obenbeschriebenen Nachverarbeitung minimiert werden. Diese iterative Nachverarbeitung ist durch die gestrichelte Rückführung des Ausgangssignals von Transcodierer 89 zum ersten Eingang des zweiten Addierers 892 angedeutet.

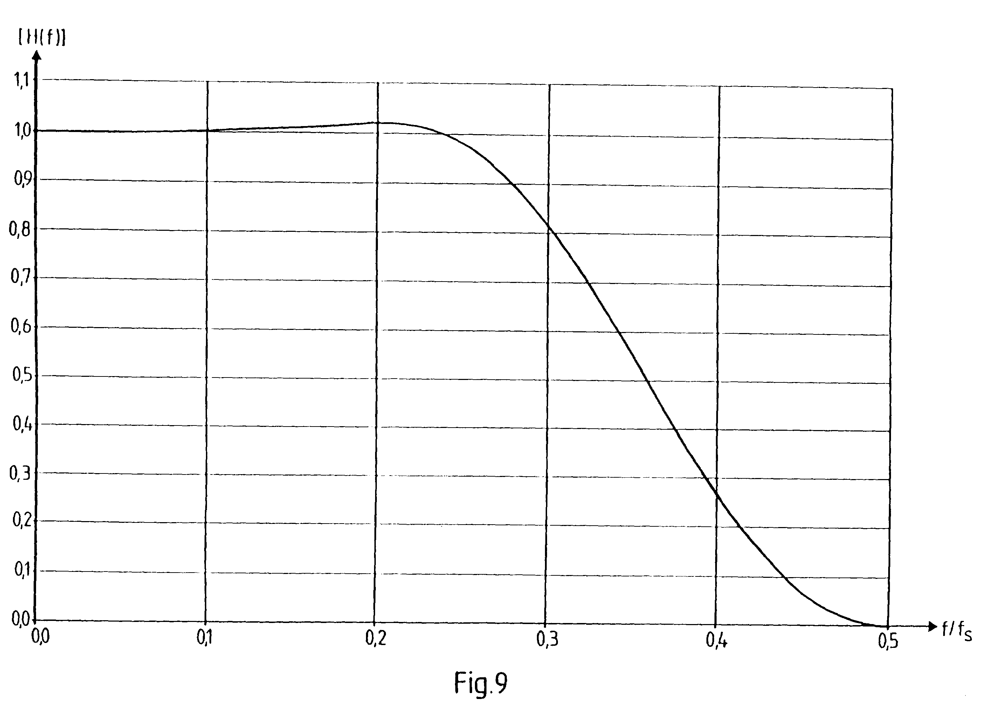

Fig. 9 zeigt den Frequenzgang der bekannten senderseitigen Tiefpaßfilterung vor der Interlace-Unterabtastung und damit auch des Tiefpaßfilters 86. Dieses Tiefpaßfilter hat folgende Koeffizienten:

-1/256, 2/256, 6/256, -31/256, 59/256, 186/256, 59/256, -31/256, 6/256, 2/256, -1/256

Bei anderen Bildformaten, z.B. 525L/60Hz/2:1, können die genannten Zahlenwerte entsprechend angepaßt werden.

**Patentansprüche**

1. Verfahren zur kompatiblen Übertragung, Decodierung oder Aufzeichnung von aus Progressiv-Bildsignalen abgeleiteten Interlace-Bildsignalen im Letterbox-Format, wobei coderseitig Bildpunktwerte für zu übertragende und/oder aufzuzeichnende Zeilen (I3) der Interlace-Bildsignale unter Verwendung eines vertikalen Filters (421) vertikal vorgefiltert sowie Helpersignale unter Verwendung dieses Filters gewonnen und mitübertragen und/oder aufgezeichnet werden, und mit Hilfe dieser Helpersignale bei einer Decodierung wieder progressive Bildsignale rekonstruiert werden können, **gekennzeichnet** durch die folgenden Verfahrensschritte:

   - bei der Codierung werden die Bildpunkt-Werte für zu übertragende und/oder aufzuzeichnende Zeilen (I3) der Interlace-Bildsignale vertikal mit einem 1-2-1-Filter (421) vorgefiltert, wobei jeweils in einem Addierer (211, 231, 251) zu dem verdoppelten Wert eines Bildpunkts dieser Zeilen der Wert von den zwei räumlich darüber und darunter liegenden Bildpunkten aus den benachbarten Zeilen (P2$_i$, P4$_i$) des Progressiv-Bildsignals addiert und das Ausgangssignal des jeweiligen Addierers mit dem Faktor 1/4 multipliziert wird;
   - bei der Codierung (44) für einen Bildpunkt-Wert für die den Helpersignalen entsprechenden Zeilen (P2) wird jeweils von dem entsprechenden Bildpunkt-Wert der räumlich gleichen Zeile (P2$_i$) des Progressiv-Bildsignals die Hälfte von den entsprechenden Bildpunkt-Werten der räumlich darüber und darunter liegenden Zeile (I1, I3) des Interlace-Bildsignals subtrahiert;
   - bei der Decodierung (48) für einen Bildpunkt-Wert einer räumlich einer fehlenden Interlace-Bildsignal-Zeile (P2) entsprechenden Zeile (P2$_o$) des Progressiv-Bildsignals wird jeweils zu dem entsprechenden, aus dem Helpersignal abgeleiteten Bildpunkt-Wert der räumlich gleichen Zeile (P2$_i$) des Progressiv-Bildsignals die Hälfte von den entsprechenden Bildpunkt-Werten der räumlich darüber und darunter liegenden Zeile (I1, I3) des noch nicht decodierten Interlace-Bildsignals addiert;
   - bei der Decodierung für einen Bildpunkt-Wert einer räumlich einer Interlace-Bildsignal-Zeile (I3) entsprechenden Zeile (P3$_o$) des Progressiv-Bildsignals wird von dem entsprechenden Bildpunkt-Wert der Interlace-Bildsignal-Zeile jeweils ein Viertel von den entsprechenden Bildpunkt-Werten der räumlich darüber und darunter liegenden Zeile (P2$_o$, P4$_o$) des decodierten Progressiv-Bildsignals subtrahiert und die so gebildete Differenz verdoppelt.

2. Verfahren nach Anspruch 1, wobei bei der Codierung bzw. Decodierung für den jeweiligen Bildpunktwert zusätzlich entsprechend multiplizierte Bildpunkt-Werte von zeitlich benachbarten Bildern verwendet werden, und zwar:

- bei der Codierung werden die Bildpunkt-Werte für zu übertragende und/oder aufzuzeichnende Zeilen (I3) der Interlace-Bildsignale vorgefiltert, wobei jeweils in einem Addierer zu dem vervierfachten Wert eines Bildpunkts dieser Zeilen der Wert von den zwei ($P2_i$, $P4_i$) räumlich darüber und darunter liegenden und den zwei zeitlich davor und dahinter liegenden Bildpunkten aus den benachbarten Zeilen ($P3_i$) des Progressiv-Bildsignals addiert und das Ausgangssignal des Addierers mit dem Faktor 1/8 multipliziert wird;
- bei der Codierung eines Bildpunkt-Werts für die den Helpersignalen entsprechenden Zeilen (P2) wird jeweils in einem Subtrahierer von dem entsprechenden Bildpunkt-Wert der räumlich gleichen Zeile ($P2_i$) des Progressiv-Bildsignals ein Viertel von den entsprechenden Bildpunkt-Werten der räumlich darüber und darunter liegenden Zeile (I1, I3) des Interlace-Bildsignals und ein Viertel von den entsprechenden Bildpunkt-Werten der zeitlich davor und dahinter liegenden Zeile ($P2_i$) des Progressiv-Bildsignals subtrahiert;
- bei der Decodierung (48) für einen Bildpunkt-Wert einer räumlich einer fehlenden Interlace-Bildsignal-Zeile (P2) entsprechenden Zeile ($P2_o$) des Progressiv-Bildsignals wird jeweils zu dem entsprechenden, aus dem Helpersignal abgeleiteten Bildpunkt-Wert der räumlich gleichen Zeile ($P2_i$) des Progressiv-Bildsignals ein Viertel von den entsprechenden Bildpunkt-Werten der räumlich darüber und darunter liegenden Zeile (I1, I3) des noch nicht decodierten Interlace-Bildsignals und ein Viertel von den entsprechenden Bildpunkt-Werten der zeitlich davor und dahinter liegenden Zeile (P2) des noch nicht decodierten Progressiv-Bildsignals addiert;
- bei der Decodierung für einen Bildpunkt-Wert einer räumlich einer Interlace-Bildsignal-Zeile (I3) entsprechenden Zeile ($P3_o$) des Progressiv-Bildsignals wird von dem entsprechenden Bildpunkt-Wert der Interlace-Bildsignal-Zeile jeweils ein Achtel von den entsprechenden Bildpunkt-Werten der räumlich darüber und darunter liegenden Zeile ($P2_o$, $P4_o$) des decodierten Progressiv-Bildsignals und ein Achtel von den entsprechenden Bildpunkt-Werten der zeitlich davor und dahinter liegenden Interlace-Bildsignal-Zeile (I3) subtrahiert und die so gebildete Differenz verdoppelt. (s. Fig. 3).

3. Verfahren nach Anspruch 1 oder 2, wobei das Helpersignal bei der Codierung mit einem Faktor von ungefähr 3 horizontal komprimiert (44) und bei der Decodierung mit dem entsprechenden Faktor horizontal expandiert (48) wird.

4. Verfahren nach einem oder mehreren der Ansprüche 1 bis 3, wobei das Helpersignal bei der Codierung in seiner Amplitude abgesenkt (44) und bei der Decodierung entsprechend amplitudenmäßig angehoben (48) wird.

5. Verfahren nach einem oder mehreren der Ansprüche 1 bis 4, wobei das Helpersignal zur Übertragung und/oder Aufzeichnung im Ultraschwarzbereich moduliert (44) wird.


## Claims

1. Method of compatibly transmitting, decoding or recording interlaced picture signals in the letterbox format where said signals are derived from progressive picture signals, wherein, at the coding end, picture element values for lines (I3) of the interlaced picture signals that are to be transmitted and/or recorded are vertically pre-filtered using a vertical filter (421) while helper signals are obtained using this filter and are transmitted and/or recorded therewith, and progressive picture signals can be reconstructed again with the help of these helper signals in a decoding process, characterised by the following method steps:

- in the course of the coding process, the values of the picture elements for the lines (I3) of the interlaced picture signals that are to be transmitted and/or recorded are vertically pre-filtered using a 1-2-1 filter (421), whereby, in a respective adder (211, 231, 251), there is added to the doubled value of a picture element in these lines, the value of the two picture elements that are spatially located thereabove and therebelow from the adjacent lines ($P2_i$, $P4_i$) of the progressive picture signal and the output signal of each adder concerned is multiplied by the factor 1/4;

- in the course of the coding process (44) for a picture element value for the lines (P2) corresponding to the helper signals, there is subtracted from the value of the respective corresponding picture element of the spatially identical line (P2i) of the progressive picture signal, half of the values of the corresponding picture elements of the lines (I1, I3) of the interlaced picture signal that are spatially located thereabove and therebelow;

- in the course of the decoding process (48) for a picture element value for a line ($P2_o$) of the progressive picture signal corresponding spatially to a missing interlaced picture signal line (P2), there is added to the respective corresponding picture element value derived from the helper signal of the spatially identical line ($P2_i$) of the

progressive picture signal, half of the corresponding picture element values of the lines (I1, I3) located spatially thereabove and therebelow of the interlaced picture signal that has not yet been decoded;

- in the course of the decoding process for a picture element value of a line (P3o) of the progressive picture signal corresponding spatially to an interlaced picture signal line (I3), there is subtracted from the respective corresponding picture element value of the interlaced picture signal line, a quarter of the corresponding picture element values of the lines ($P2_o$, $P4_o$) located spatially thereabove and therebelow of the decoded progressive picture signal and the difference formed thereby is doubled.

2. Method in accordance with Claim 1, wherein in addition, correspondingly multiplied picture element values of temporally adjacent images are used during the coding and decoding process for the picture element value concerned, namely:

- in the course of the coding process, the picture element values for the lines (I3) of the interlaced picture signals that are to be transmitted and/or recorded are pre-filtered, whereby, in a respective adder, there is added to the quadrupled value of a picture element in these lines, the value of the two ($P2_i$, $P4_i$) picture elements located spatially thereabove and therebelow from the adjacent lines ($P3_i$) of the progressive picture signal and the value of the two picture elements occurring temporally therebefore and thereafter from the adjacent lines ($P3_i$) of the progressive picture signal and the output signal of the adder is multiplied by the factor 1/8;

- in the course of coding a picture element value for the lines (P2) corresponding to the helper signals, there is subtracted in a respective subtracting means from the value of the corresponding picture element of the spatially identical line ($P2_i$) of the progressive picture signal, a quarter of the values of the corresponding picture elements of the lines (I1, I3) of the interlaced picture signal that are spatially located thereabove and therebelow and a quarter of the values of the corresponding picture elements of the line ($P2_i$) of the progressive picture signal occurring temporally therebefore and thereafter;

- in the course of the decoding process (48) for a picture element value of a line ($P2_o$) of the progressive picture signal corresponding spatially to a missing interlaced picture signal line (P2), there is added to the respective corresponding picture element value derived from the helper signal of the spatially identical line ($P2_i$) of the progressive picture signal, a quarter of the corresponding picture element values of the lines (I1, I2) located spatially thereabove and therebelow of the interlaced picture signal that has not yet been decoded and a quarter of the corresponding picture element values of the line (P2) occurring temporally therebefore and thereafter of the progressive picture signal that has not yet been decoded;

- in the course of the decoding process for a picture element value of a line ($P3_o$) of the progressive picture signal corresponding spatially to an interlaced picture signal line (I3), there is subtracted from the value of the respective corresponding picture element of the interlaced picture signal line, an eighth of the values of the corresponding picture elements of the lines ($P2_o$, $P4_o$) located spatially thereabove and therebelow of the decoded progressive picture signal and an eighth of the values of the corresponding picture elements of the interlaced picture signal line (I3) occurring temporally therebefore and thereafter and the difference formed thereby is doubled (see Fig. 3).

3. Method in accordance with Claim 1 or 2, wherein the helper signal is horizontally compressed (44) during the coding process by a factor of approximately 3 and is horizontally expanded (48) during the decoding process by the corresponding factor.

4. Method in accordance with any one or more of the Claims 1 to 3, wherein the helper signal is reduced (44) in amplitude during the coding process and has its amplitude correspondingly raised (48) during the decoding process.

5. Method in accordance with any one or more of the Claims 1 to 4, wherein the helper signal is modulated (44) in the ultra black band for transmission and/or recording.

**Revendications**

1. Procédé de transmission, de décodage ou d'enregistrement compatibles de signaux vidéo entrelacés au format Letterbox déduits de signaux vidéo progressifs, des valeurs d'éléments d'image préfiltrées à la verticale, par un filtre vertical (421), étant obtenues et transmises et/ou enregistrées, côté codeur pour des lignes (I3) des signaux vidéo entrelacés à transmettre et/ou à enregistrer, ainsi que des signaux auxiliaires grâce au même filtre, lesdits signaux auxiliaires permettant de reconstruire des signaux vidéo progressifs lors du décodage, **caractérisé en ce** qu'il présente les étapes de processus suivantes :

- lors du codage, les valeurs d'éléments d'image pour les lignes (I3) à transmettre et/ou à enregistrer des signaux vidéo entrelacés sont préfiltrées à la verticale par un filtre 1-2-1 (421), la valeur de deux éléments d'image des lignes voisines ($P2_i$, $P4_i$) du signal vidéo progressif situés au-dessus et au-dessous de la valeur doublée d'un élément d'image de ces lignes étant à chaque fois additionnée à cette dernière dans un additionneur (211, 231, 251) et le signal de sortie de l'additionneur étant multiplié par le facteur 1/4 ;
- lors du codage (44) pour une valeur d'élément d'image pour les lignes (P2) correspondant aux signaux auxiliaires, la moitié des valeurs d'éléments d'image correspondantes de la ligne située au-dessus et au-dessous (I1, I3) du signal vidéo entrelacé est respectivement déduite de la valeur d'élément d'image correspondante de la ligne identique dans l'espace ($P2_i$) du signal vidéo progressif;
- lors du décodage (48) pour une valeur d'élément d'image d'une ligne ($P2_0$) du signal vidéo progressif correspondant spatialement à une ligne (P2) manquante du signal vidéo entrelacé, la valeur d'élément d'image de la ligne spatialement identique ($P2_i$) du signal vidéo progressif déduit du signal auxiliaire est respectivement complétée par la moitié des valeurs d'éléments d'image correspondantes de la ligne spatialement supérieure et inférieure (I1, I3), du signal vidéo entrelacé non encore décodé ;
- lors du décodage pour une valeur d'élément d'image d'une ligne ($P3_0$) du signal vidéo progressif correspondant spatialement à une ligne (I3) du signal vidéo entrelacé, on déduit respectivement de la valeur d'élément d'image correspondante de la ligne des signaux vidéo entrelacés un quart des valeurs d'éléments d'image correspondantes de la ligne spatialement supérieure et inférieure ($P2_0$, $P4_0$) du signal vidéo progressif décodé et on double la différence ainsi obtenue.

2. Procédé selon la revendication 1, dans lequel on utilise en plus des valeurs d'éléments d'image multipliées en conséquence d'images voisines dans le temps, lors du codage ou du décodage de la valeur d'élément d'image respective, à savoir :

- lors du codage, les valeurs d'éléments d'image pour les lignes (I3) à transmettre et/ou à enregistrer des signaux vidéo entrelacés sont préfiltrées, la valeur de deux éléments d'image ($P2_i$, $P4_i$) situés au-dessus et au-dessous dans l'espace et des deux éléments d'image des lignes voisines ($P3_i$) du signal vidéo progressif situés avant et après dans le temps, étant respectivement additionnée à la valeur quadruplée d'un élément d'image de ces lignes, dans un additionneur, et le signal de sortie de l'additionneur étant multiplié par le facteur 1/8 ;
- lors du codage pour une valeur d'élément d'image pour les lignes (P2) correspondant aux signaux auxiliaires, le quart des valeurs d'éléments d'image correspondantes de la ligne située au-dessus et au-dessous (I1, I3) du signal vidéo entrelacé dans l'espace et le quart des valeurs d'éléments d'image correspondantes de la ligne antérieure et postérieure dans le temps ($P2_i$) du signal vidéo progressif sont respectivement déduits, dans un soustracteur, de la valeur d'élément d'image correspondante de la ligne identique dans l'espace ($P2_i$) du signal vidéo progressif ;
- lors du décodage (48) pour une valeur d'élément d'image d'une ligne ($P2_0$) du signal vidéo progressif correspondant spatialement à une ligne (P2) manquante du signal vidéo entrelacé, la valeur d'élément d'image de la ligne spatialement identique ($P2_i$) du signal vidéo progressif déduit du signal auxiliaire est respectivement complétée par le quart des valeurs d'éléments d'image correspondantes de la ligne spatialement supérieure et inférieure (I1, I3), du signal vidéo entrelacé non encore décodé et par le quart des valeurs d'éléments d'image correspondantes de la ligne (P2) antérieure et postérieure dans le temps ($P2_i$) du signal vidéo progressif non encore décodé ;
- lors du décodage pour une valeur d'élément d'image d'une ligne ($P3_0$) du signal vidéo progressif correspondant spatialement à une ligne (I3) du signal vidéo entrelacé, on déduit respectivement de la valeur d'élément d'image correspondante de la ligne des signaux vidéo entrelacés un huitième des valeurs d'éléments d'image correspondantes de la ligne spatialement supérieure et inférieure ($P2_0$, $P4_0$) du signal vidéo progressif décodé et un huitième des valeurs d'éléments d'image correspondantes de la ligne (I3) du signal vidéo entrelacé, antérieure et postérieure dans le temps, et on double la différence ainsi obtenue (voir la figure 3).

3. Procédé selon les revendications 1 ou 2, le signal auxiliaire étant compressé horizontalement d'un facteur d'environ 3 lors du codage (44) et décompressé horizontalement d'un facteur correspondant lors du décodage (48).

4. Procédé selon l'une ou plusieurs des revendications 1 à 3, l'amplitude dû signal auxiliaire étant abaissée lors du codage (44) et à nouveau rehaussée en conséquence lors du décodage (48).

5. Procédé selon l'une ou plusieurs des revendications 1 à 4, le signal auxiliaire étant modulé dans une plage infranoir (44) en vue de la transmission et/ou de l'enregistrement.

FIG.1

FIG.2

FIG. 3

EP 0 581 808 B1

576
1:1

401

41

432
1:1

424

+

−

432
1:1

421

432
1:1

422

432
2:1

423

43

432
1:1

44

432
2:1

40

45

47

461

48

+ +

481

462

+
−

482

483

49

576
1:1

402

FIG. 4

FIG. 5

FIG. 6

FIG. 7

Fig.8

Fig.9

EP 0 581 808 B1